# EUROPEAN PATENT APPLICATION

(11) **EP 1 480 473 A2**
(43) Date of publication of application: **24.11.2004**
(21) Application number: 04252994.1
(22) Date of filing: 21.05.2004
(51) Int. Cl.: H04Q 7/22

(54) **Tags for location based services in wireless networks**

(30) Priority: 23.05.2003 US 444294
(71) Applicant: Openwave Systems Inc., Redwood City, CA 94063 (US)
(72) Inventor: Ekerbom, Thomas, 18494 Akersberga (SE)
(74) Representative: Meldrum, David James

(57) **Abstract**

Tags are used in conjunction with location information to match wireless network users. In one implementation, a tag may include a term that identifies an interest of the user establishing the tag such that the tag can be used to match that user to another user or to service information. The use of such tags facilitates anonymous contact between wireless network users for enhanced security and further allows for substantially unlimited service application functionality.

## Description

### FIELD OF THE INVENTION

The present invention relates in general to providing services to wireless network users based on location and, in particular, to using event-specific tags to define and securely execute services of location-based applications in wireless networks.

### BACKGROUND OF THE INVENTION

Location-based applications for wireless networks generally provide services to a wireless subscriber based on the location or locations of the subscriber's mobile unit (e.g., wireless phone, pager, PDA, or other analog or digital wireless unit) or other identified wireless units. Common examples of such services include E911, location-based billing and service information applications. In E911 applications, the location of a wireless unit is used when an emergency call is placed to route the call to an appropriate dispatcher and/or to provide location information regarding the wireless unit to the emergency dispatcher. In location-based billing applications, a billing rate for a call is established based on the location of the wireless unit , e.g., in relation to a home zone of the wireless subscriber. In service information applications, a wireless subscriber can obtain information regarding local service providers of a particular type, e.g., restaurants, hotels and the like, based on the subscriber's location.

More recently, Openwave Systems, Inc. of Redwood City, California has developed certain subscriber-to-subscriber applications including those marketed under the names FriendFinder and @Villages. The FriendFinder application allows subscribers to see the location of their friends or co-workers quickly and easily using their mobile phones as long as the friends agree to be found. @Villages allows a subscriber to find and contact other subscribers within a virtual village, again if such other subscribers agree to be found and contacted. Such subscribers may be contacted based on predefined personal profile information.

Generally, location-based applications are offered to end users by their carriers. The carriers define the applications that are available and (with certain exceptions such as E911) the subscriber must then register to use these services. These applications generally provide pre-defined functionality and pre-defined access codes, e.g., the subscriber can use a keypad to enter ρhotel to obtain information about local hotels. Although these applications provide an increasing variety of services to wireless subscribers, the services/information available to a particular subscriber are still generally limited by the predefined functionality or predefined database structures.

Some applications attempt to provide customized information to a subscriber based on a subscriber profile defining interests, behavior and the like. While such applications represent a useful step towards personalizing service offerings, they are generally limited to predefined profiles. In reality, interests and modes of behavior may change after registration and, indeed, from moment to moment. Such applications may not accommodate the spontaneity which is useful in a variety of contexts including making new acquaintances and addressing unanticipated user needs.

### SUMMARY OF THE INVENTION

The present invention is directed to the use of tags in conjunction with location information to match wireless network users to other network users, service information or the like. Such tags may be a term, alphanumeric string (including letters and/or numbers), or other identifier for identifying a user for the purposes of a contact set, i.e., one or more contacts where each such contact relates to a network communication or series of communications using the location-based application/system. In this regard, the tag preferably includes an alias by which the user can be referenced within the system and may include other information such as the location and time associated with the establishment of the tag, or other information for use by the system. The use of tags enables such matches to be accomplished based on particular interests, modes of behavior or other user-specific criteria, even where such user-specific criteria is not predefined to be supported by an application. Thus, in effect, the tags define the application functionality and the variety of such application functionality may be substantially unlimited. The tags also enable secure and anonymous communication between users. Moreover, a given user may employ multiple tags during a given time period or at different times in order to make a variety of contacts and receive a variety of types of information.

According to one aspect of the present invention, location-based services are provided based on a user defined service request. The associated method involves establishing a system for providing location-based services in a wireless network, receiving a user defined service request requesting a service defined by a user independent of the system, operating the system to identify information responsive to the request and transmitting the identified information to the user. The user defined service request may include one or more terms identifying an interest (e.g., activity, product, preferred companion personal trait, etc.) of the user. The system can use this information to identify another network user, product or service information, activity or the like of potential interest to the user and provide related information. Such identification of responsive information may involve, for example, simple matching of identical request terms, logic enhanced matching of similar or related terms, logic enhanced matching of complementary or predefined match terms, or more complex search engine driven algorithms for identifying responsive information. In this manner, a user can define service application functionality and is not limited to predefined functionality.

According to another aspect of the present invention, contact related identifiers are used to identify particular network users to others in the context of a multi-user application such as an interactive application for facilitating introductions or exchanges of information between users having no prior relationship. In this case, a service application is established for providing user information regarding a first user to at least one other network user. The user information may include personal information such as interests of the first user or product, service or other information. The system defines multiple (two or more) contact sets for the first user. For example, the first user may initiate a service request to locate tickets to an event, and another user (such as a local business) may initiate a request to deliver product information (e.g., promotional coupons) to the first user (e.g., based on a previously indicated interest of the first user). The associated communication by which information is provided to the first user may define a contact and one or more contacts may define a contact set.

In accordance with this aspect of the present invention, different identifiers are associated with the first user for different contact sets. Such identifiers may convey information regarding the first user or the nature of the request (e.g., symphony 1, hockey tickets, state alumnus 1, etc.) or may be content neutral (e.g., user 73). Moreover, the multiple identifiers for the given user may exist concurrently and/or sequentially. The different identifiers may be used to identify a given user to one or more other users. It will be appreciated that such event-specific identifiers allow for secure and anonymous exchange of information between system users. In particular, the temporary and potentially impersonal nature of such identifiers allow for improved security and privacy protection.

According to a still further aspect of the present invention, time adjustments are made in connection with determining proximity of multiple mobile users of a location-based service system. The associated method involves obtaining first location information for a first mobile user associated with a first time and second location information for a second mobile unit associated with a second time. For example, the location information may be associated with times when the users establish tags and, in this regard, the times will generally be close to the times when the tags were entered into the system by the user but may be somewhat earlier or later than such entry times (e.g., the last known location for the user may be used when the tag is entered or location equipment may be involved to locate the user, perhaps with some time lag). The location-based services system then determines a proximity of the users for a given time using the first and second location information and a time difference.

The time difference may be a time between any two of the first time, the second time and the given time. For example, the passage of time between when the users were located may be considered in the proximity determination. By way of further example, where one of the users indicates that a tag should remain "active" (e.g., should not expire) during a given time window (e.g., where that user expects to remain at a given location), only the time difference between when the other user was located and the time of the proximity determination may be considered. As a final example, the time periods between the time of the proximity determination and each of the user location times may be considered. The time difference may be used, for example, to add a value to a primary proximity calculation based on the first and second location information, reflecting the mobile nature of the users. This added value may utilize user specific data, e.g., speed of travel or other trend information obtained for that user, locale-specific information, e.g., based on location on an expressway, rail line, or downtown area indicating a potential travel speed, and/or may be based on a probabilistic analysis. For example, a certain distance may be added to the value of the primary proximity calculation for each minute of the relevant time difference.

According to a still further aspect of the present invention, mobile users of a wireless network are linked based on proximity and a match of inputs entered by the users. In this regard, first and second users provide inputs into the system, e.g., each may enter a tag indicating an interest of the user. Each of the users is located based on one or more location inputs. The location-based services application then performs, in any sequence, a first comparison of the first and second inputs of the first and second users, respectively, and a second comparison of the locations of the users. Based on these comparisons, information regarding one of the users is provided to the other, e.g., to enable the users to establish contact if desired. Alternatively, information regarding each user may be made available to the other. In this manner, mobile users may be linked based on both proximity and potentially matching interests.

In one implementation, a system for providing location-based services in a wireless network involves receiving tag information from a number of wireless network users, where such tag information relates to interests of associated users. The system further involves obtaining location information regarding the locations of the wireless network users, matching a first user and a second user based on the tag information and the location information and providing information to at least one of the first and second users regarding the other.

The tag information may be defined by the user or by the service operator. For example, a user may enter a term or terms relating to an interest of the user such as: "party," "golf," "date," "jog," "Russian," etc. In such cases, logic on a network service application platform may be operated to match the subscriber to other subscribers proximate to the first subscriber, within the same area or virtual village as the original subscriber, or otherwise within or proximate to a location identified by the first subscriber and to provide appropriate contact information. In this regard, links may be provided to each of the first and second subscribers identifying the other subscriber by using the tag information such that these subscribers can establish communication via voice or data network.

The service operator may establish certain limitations relating to the use of such tags. For example, the service operator may allow only certain defined tags. Alternatively, the service operator may disallow the use of certain tags. In this manner, the service operator can inhibit or encourage certain types of contacts as may be desired.

Although the present implementation of the invention has been described above in connection with matching individual subscribers, it will be appreciated that such tags may be used by service providers and other entities. For example, a restaurant may periodically transmit a variety of tags such as "pizza," "seafood," "steak," etc. Similarly, a retail outlet may effectively advertise a sale by entering a tag such as "sale," or "skis". Also, individuals or businesses may offer goods or services to local potential customers to establish a "virtual marketplace". In such cases, product information may be effectively advertised to willing subscribers in the vicinity. The service platform may include logic for improved matching of tags. For example, tags may be matched based on logic for identifying synonyms such as "taxi" and "cab". Such logic may be used to match conceptually related terms such as "workout" and "weightlifting".

To further enhance such logic, the service may establish a number predefined terms. Thus, for example, in the context of matchmaking, the tag "M2F" may indicate a male interested in establishing contact with a female. Similar tags such as "F2M," "M2M" and "F2F" may be defined. In this manner, complementary tags, not necessarily identical tags, may be matched. Similar functionality may be provided in connection with matching vendors to potential purchasers, individual sellers to buyers, and the like.

It will be appreciated that an individual subscriber may utilize multiple tags during a given time period. For example, such a subscriber may be interested in finding a local restaurant with an extensive wine list and a willing companion to meet at the restaurant. The subscriber may concurrently establish one tag for identifying the restaurant and another tag for identifying the potential companion. Such use of multiple tags allows for greater functionality subject to practical processing, bandwidth and messaging protocol limitations.

### BRIEF DESCRIPTION OF THE DRAWINGS

For a more complete understanding of the present invention and further advantages thereof, reference is now made to the following Detailed Description taken in conjunction with the drawings in which:
Fig. 1 is a schematic diagram of a wireless network implementing the present invention;
Fig. 2 is a schematic diagram showing the operation of the present invention in the context of implementing subscriber-to-subscriber services;
Figs. 3A-3F illustrate a contact set implemented in accordance with the present invention; and
Figs. 4A-4E illustrate a process for limiting contacts in accordance with the present invention.

### DETAILED DESCRIPTION

In the following description, there is described an example of a wireless network system implementing subscriber-to-subscriber services in connection with certain tags. It will be appreciated that this example is utilized to illustrate the use of tags to define and implement location-based services within a wireless network but many other implementations are possible in accordance with the present invention.

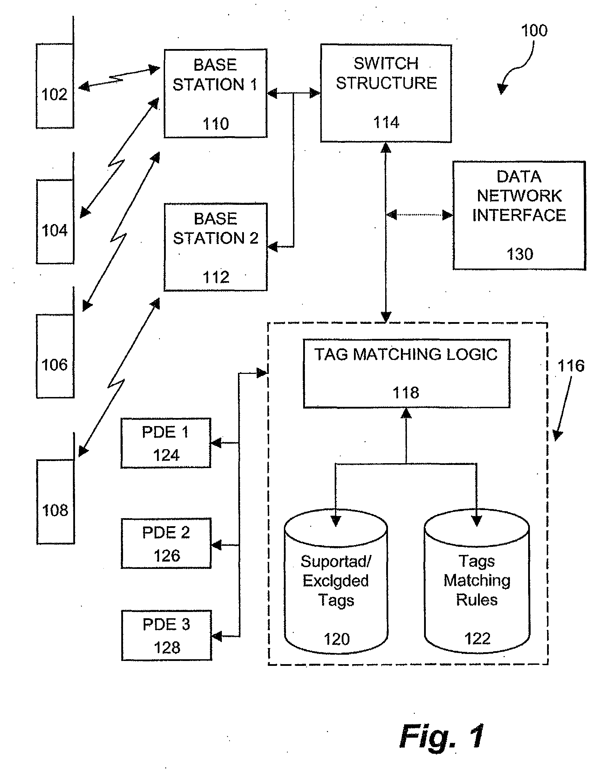

Referring to Fig. 1, a wireless network is generally indicated by the reference numeral 100. The network 100 allows mobile subscribers 102, 104, 106 and 108 to communicate with one another, with wireline users or with other data terminals via network interfaces as described in more detail below. The wireless units 102, 104, 106 and 108 may be, for example, analog or digital wireless telephones, pagers, data-enabled telephones, PDAs or other wireless terminals and may communicate using SMS, WAP, J2ME or other technologies. Preferably, each of the wireless units 102, 104, 106 and 108 is operative for text communication via the wireless network 100. The wireless units 102, 104, 106 and 108 generally communicate with the wireless network 100 via wireless communications to a base station. In the illustrated example, two base stations 110 and 112 are illustrated. It will be appreciated that many such base stations are generally included within the network 100. The base stations 110 and 112, in turn, communicate with a switch structure 114 such as Mobile Switching Center or Service Control Point. The switch structure 114 may perform a number of functions including establishing a voice channel, interfacing with a wireline telecommunications network and generating billing records.

The location-based services functionality of the present invention is implemented in connection with one or more platforms that generally interface with the wireless units 102, 104, 106 and 108 via the switch structure 114. In this regard, the platform or platforms implementing the location-based services may be located proximate to the switch structure 114 or may be remotely located and the platform or platforms may be directly interfaced to the switch structure 114 or interfaced with the switch structure 114 via a data network such as the Internet. In the illustrated example, the location-based service application is illustrated as being implemented on a single platform 116. An optional data network interface is represented by block 130.

As shown, the platform 116 includes a tag matching logic module 118, a database of supported/excluded tags 120, a database of banned user relations 121 and a database of tag matching rules 122. The tag matching logic 118 is operative for setting tags, e.g., based on user inputs, and matching tags of network users. With regard to setting tags, the system may work in a variety of ways. In this regard, the tag structure may be an open system where users can define tags substantially without limitation. Thus, as discussed above, a user may enter a term related to a service of interest such as "taxi," "party," "golf" or "pizza". It will be appreciated that such terms may be entered without reference to any predefined list of supported terms of the service application. Alternatively, the tag structure may be a closed system where a system operator provides a number of predefined tags that may be used by wireless network users. Such a list may be made available to users via menus displayed on the mobile units or otherwise.

A variety of tag structures between these totally open and totally closed structures may be provided. For example, certain tags may be excluded so as to place certain restrictions on the types of conduct supported by the system. In any case, the tags associated with particular users are stored in the database 120. It will be appreciated that the tags may be indexed to particular users and that a given user may have multiple tags at any time. The database 120 may further include additional information with regard to a defined tag for a user such as the time that the tag was established, the location of the user or other location information specified by the user and text or other information associated with the tag. In addition, the database 120 may store information indicating an expiration time for a tag or a time period or periods where the tag is to be active. Such information may be specified by the user who established the tag or may be otherwise determined.

As noted above, tags may be matched based not only on tag content but also based on location information regarding the positions of one or more of the mobile units 102, 104, 106 and 108. In this regard, the tag matching logic 118 can access location information available in the wireless network 100. It will be appreciated that such location information may be obtained from a variety of sources as generally indicated by the Position Determination Equipment modules 124, 126 and 128. In particular, the location information may be handset-based, network assisted or based on network topology. Examples of handset-based position equipment include mobile units with GPS transceivers and certain TDOA implementations. It will be appreciated that in such cases, though not shown, the pathway for communicating such location information to the platform 116 may be via a base station 110 and 112 and switch structure 114. Network-assisted location determination technologies include certain AOA, TDOA, and A-GPS location finding equipment. Finally, network topology location finding technologies include cell ID, cell sector and micro cell technologies where the location of a mobile unit is approximated based on proximity to one or more cell site structures. It will be appreciated that any location information available in the network 100 may be used in this regard. Additionally, a location of interest for a particular contact set may be specified by a user as by entering a street address or the like. Such an input may then be geocoded by a GIS application (not shown) to facilitate location comparisons.

The tag matching logic 118 matches tags of different users based on certain tag matching rules stored on database 122. A variety of different types of rules may be used in this regard including content-based rules, proximity-based rules and time-based rules. In a simple implementation, the logic 118 executes a content-based rule that matches tags that are identical e.g., "party". The logic 118 may alternatively execute certain rules for matching tags that do not have identical content. For example, the tag matching rules 122 may allow for matching tags based on synonyms, such as matching "cab" and "taxi". Similarly, the rules 122 may allow for matching tags that are conceptually related such as "workout" and "weightlifting". The rules 122 may also include content-based rules for matching tags that are complementary rather than identical or similar. For example, in the matchmaking context, the tag M2F may be matched to tags for F2M. It will be appreciated that many other content-based rules may be supported.

In addition to content-based rules, the tag matching rules database 122 may include proximity and time-based rules. The proximity-based rules may establish priorities for tag matching based on proximity, the number of tags to be reported, definitions of relevant geographical zones and the like. For example, the logic 118 may match tags meeting a content-based rule as described above, where the users are within a predefined proximity (e.g., within a given radius), within the same network subdivision (e.g., the same cell service area) or within the same predefined virtual village e.g., the downtown area of a city or, the same corporate campus or within a university community of a city. Alternatively, the tag matching logic 118 may identify the closest 1, 3, 5 or other number of users with identical tags.

The time-based rules may be used to account for the fact that the users in a wireless network are generally mobile. Additionally, the time-based rules account for the fact that the interests of users may change over time. Thus, a simple time-based rule may determine that tags will expire from the tag database 120 at a certain time after they were initially established or at a time otherwise specified in records of the database 120. Alternatively, the time-based rules may be used such that time is factored together with proximity by the tag matching logic 118. For example, a certain amount of distance may be added as an uncertainty to a proximity determination based on the age of the tag (e.g., so as to add 1 km for every 10 minutes of elapsed time). Such uncertainty may cause a tag to be de-prioritized by the tag matching logic with regard to a particular matching contact. More complicated time-based rules may be supported such as time-based rules that are context dependent. For example, a "taxi" tag may have a shorter expiration threshold than a tag for "party."

The illustrated system is utilized to match one mobile user 102, 104, 106 and 108 with another mobile user 102, 104, 106 and 108, although it will be appreciated that the invention is not limited to such implementations. Thus, in the illustrated example, two users in the same proximity and with the same or complementary (or otherwise matching) interests may be linked for communication to establish an acquaintance or to pursue a mutually desirable activity. The tags allow this to be accomplished efficiently and anonymously. In certain cases, as will be described in more detail below, it may be desirable to prevent certain contacts between users, for example, at the request of one of the users. Such banned relations are stored in the database 121, which stores information defining these relations. The database may be consulted, for example, prior to identifying matching tags, prior to forwarding identifying information regarding one user to another, and/or prior to allowing communication between the subject users.

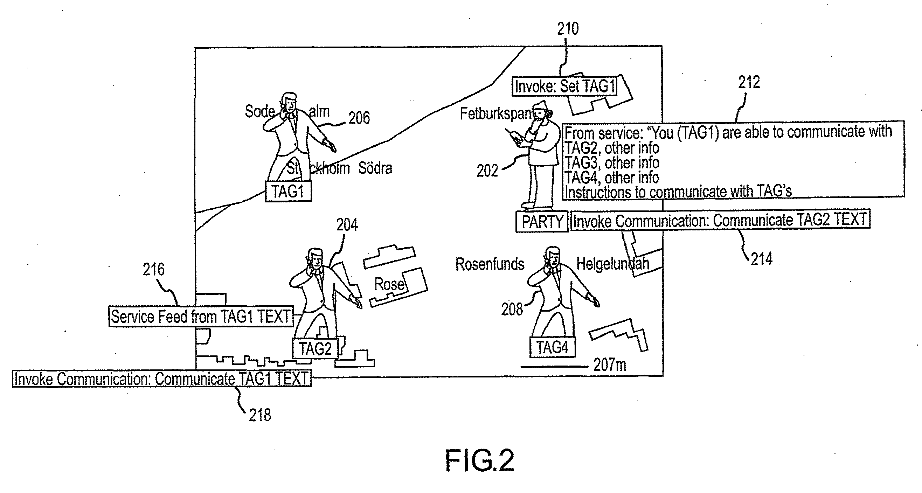

Fig. 2 illustrates an area 200 of a wireless network where four users of interest 202, 204, 206 and 208 are located at a given time. In the illustrated example, it is assumed that party 202 is entering a tag where users 204, 206 and 208 have previously entered tags into the system. As noted above, an essentially unlimited number and variety of tags may be supported by the service such as, for example, the tag "jog" that may be entered to help locate potential jogging partners or "Russian" to identify potential participants in a Russian conversational language practice. In the illustrated example, such tags are represented by the generic "TAG."

As shown, the associated process is initiated when the party 202 invokes the service by setting (210) the tag. For example, the party 202 may enter the letters JOG via his mobile unit together with an appropriate transmission key such as Enter. The service receives this tag and may reassign the tag the alphanumeric TAG 1 to distinguish that tag from the identical tags of other users. In addition, the system may then associate a time identifier with the tag and may invoke location finding equipment or otherwise obtain location information for the mobile unit for association with the tag.

The service then matches the tag based on tag matching rules relating to tag content and proximity. In this case, three tags, namely TAG 2, TAG 3 and TAG 4 are matched to TAG 1 based on identity of the tags, location within the virtual village of network area 200, and temporal proximity due to the fact that these tags have not yet expired. As a result the service may provide back to the party 202 display information 212. The display information 212 identifies the three other parties by their tags, TAG 2, TAG 3 and TAG 4. The display information 212 also includes additional text that has been entered by the other users in connection with their tags. For example, the text may indicate that each of the other users is looking for a running partner within a given time frame to go for a jog of a certain distance range. Finally, the display information 212 may provide instructions to communicate with any one or more of the other identified users. For example, the instructions may instruct the party 202 to highlight a selected one of the tags and enter responsive text.

In response to this display information 212, the party 202 may invoke (214) communication with a selected user identified by a tag. For example, based on the text associated with the various tags, the party 202 may identify one of the tags as indicating similar interests. The party 202 in the illustrated example communicates with the user associated with TAG 2 by entering "TAG 2" followed by text such as "let's meet at the recreational center at noon for a five mile jog." This message is then transmitted as a service feed (216) to the user associated with TAG 2 in the form of "TAG1:TEXT".

The user associated with TAG 2 may be notified of this communication in any appropriate manner such as, in the case of a wireless telephone, by an appropriate ringer pattern. User 204 may then invoke (218) communication to enter an appropriate response. For example, user 204 may enter TAG 1 followed by text such as "will meet you in the lobby."

It will thus be appreciated that tag structure of the present example can be utilized to allow the users to define a location-based service that did not necessarily previously exist within the network. In the case of Fig. 2, the tag system was used to define an application for finding jogging partners. Moreover, the users were linked anonymously thereby addressing privacy and security issues. Moreover, the illustrated service advantageously utilizes the location information available within the wireless network to link proximate users without the need for the those users to enter location information.

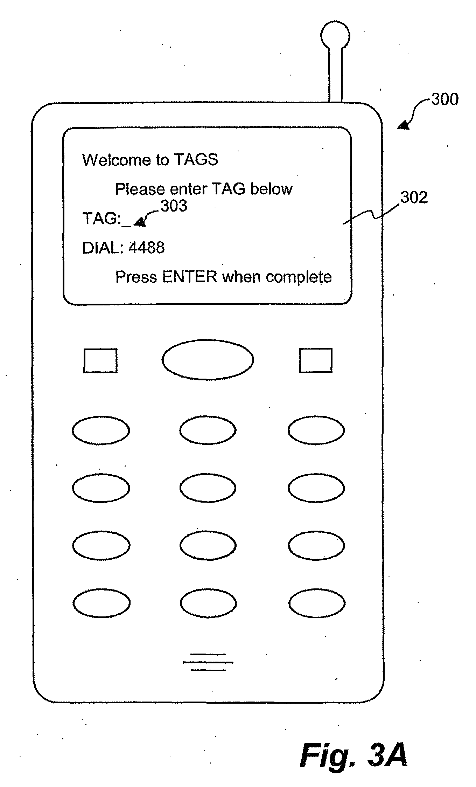

Figs. 3A-3F illustrate another concept set in accordance with the present invention. In particular, Fig. 3A illustrates an example of a user interface as it may appear in the display 302 at the first user's mobile unit 300. The illustrated interface is a welcome screen where the first user is invited to enter tag text by a prompt 303. The interface also shows a short number (shortnum), which is a default number already filled in the interface, for dialing the service and invites the first user to press "enter" once the tag has been properly entered. Such a welcome screen may be stored on the mobile unit 300 for display upon entry of a service selection key or may be downloaded from the service site upon selection of the service. For example, if the user is interested in finding companions to attend a football game, the user may choose to enter the tag "FOOTBALL".

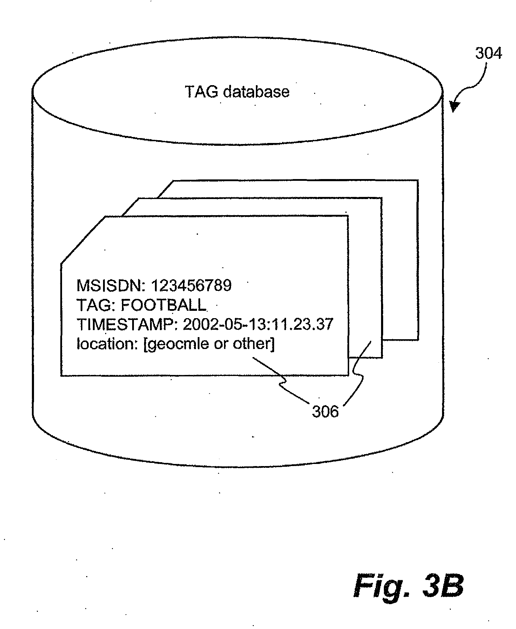

Fig. 3B illustrates a tag database 304 including a number of tag files 306. In the illustrated implementation, a file is established in the tag database 304 corresponding to the FOOTBALL tag entered by the first user. The illustrated file 306 includes information identifying the first user, such as an electronic serial number/mobile identification number or, as shown, an MSISDN. The file 306 further includes a field for storing the tag text, a field for storing a time stamp associated with establishment of the tag and a field for identifying the location of the first user. For example, the location information may include information identifying a geocode, cell ID or other network subdivision where the user is located, or other location information depending on the location finding technology employed. In this regard, the location information may be uploaded from the mobile unit in the case of a handset-based location finding technology, may be provided from a network node associated with a particular location finding technology, or may be provided by a location gateway that accumulates information for mobile users from one or more of various location sources. The tag database may be provided on the same physical platform as the tag matching logic and other components of the system or such components may be geographically distributed. In any case, the system is then operative to apply certain rules for matching tags as described above so as to identify potential contacts for the first user.

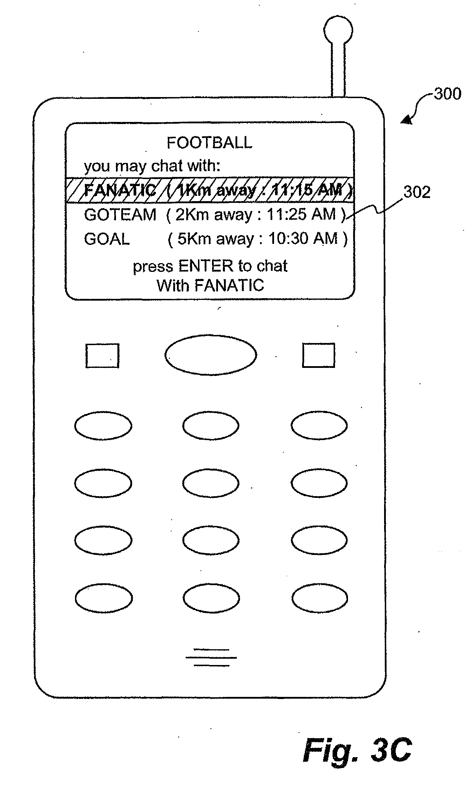

Such contact information may then be provided to the first user via a user interface as illustrated in Fig. 3C. In this case, the display 302 of the first user's mobile unit 300 displays tag information associated with three potential contacts; namely, FANATIC, GOTEAM and GOAL. In the illustrated implementation, each contact is identified by a tag content including a user selected term, proximity information and time information. The user identified by the tag "FANATIC" is listed first in this case, for example, due to closest proximity. As shown, the FANATIC tag is not the most recently entered tag (indeed, the GOTEAM tag was established two minutes after the FOOTBALL tag), but, in this case, the time-based rules did not de-prioritize the FANATIC tag relative to the GOTEAM tag in a manner which resulted in a different display order. As shown in Fig. 3C, the first entry, FANATIC, is automatically highlighted so that the first user need only press "enter" in this case to initiate a contact with FANATIC.

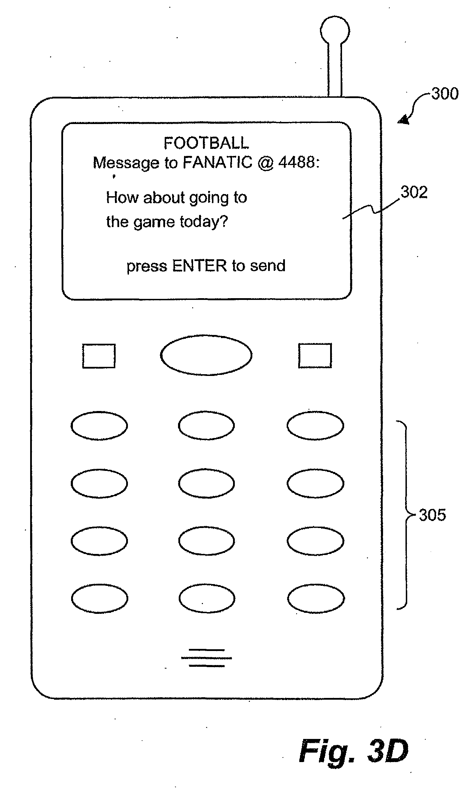

Upon pressing the enter button, the first user is provided with a further interface as illustrated in Fig. 3D where the user is prompted to enter text to be transmitted to FANATIC. The first user can then use the keypad 305 to enter a message to be transmitted to FANATIC followed by the enter key.

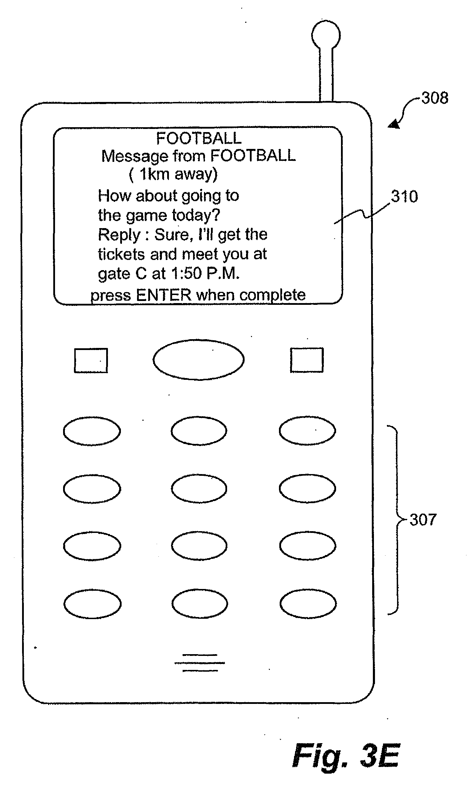

Fig. 3E illustrates a resulting interface that is shown on a display 310 of a mobile unit 308 associated with a second user who established the tag FANATIC. As shown, the interface identifies the first user, for example, by the tag term FOOTBALL together with proximity information. It will thus be appreciated that a contact is anonymously established between the first and second users by using the tags. The illustrated interface includes the text entered by the first user together with space for a reply from the second user. The second user can then use the keypad 307 of the unit 308 to enter an appropriate reply to be transmitted back to the first user.

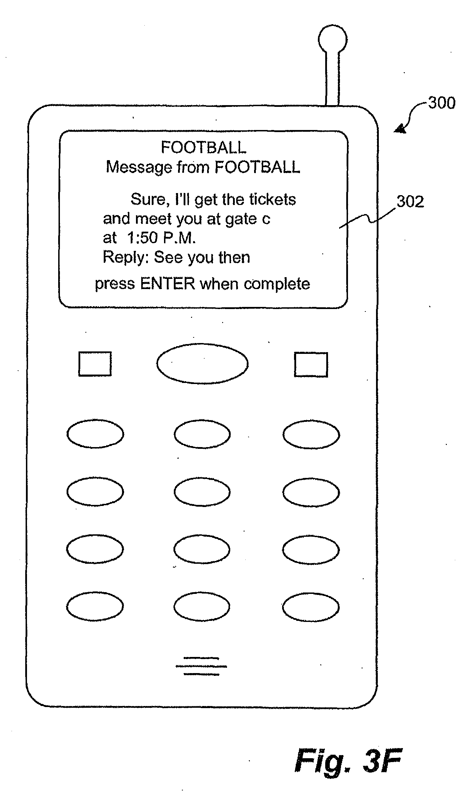

Fig. 3F shows the resulting reply entered in the display 302 of the first user's mobile unit 300. The first user is again prompted to enter a reply and it will be appreciated that such a contact set may continue indefinitely. When the contact set is complete, one or both (or all, in the case of multilateral contact groups of more than two people) may hang up or enter another command to terminate the contact set. Although this example has been provided in the context of text entries using keypads, it will be appreciated that the messages may be transmitted by voice, video or by using a voice recognition system for converting voice into text.

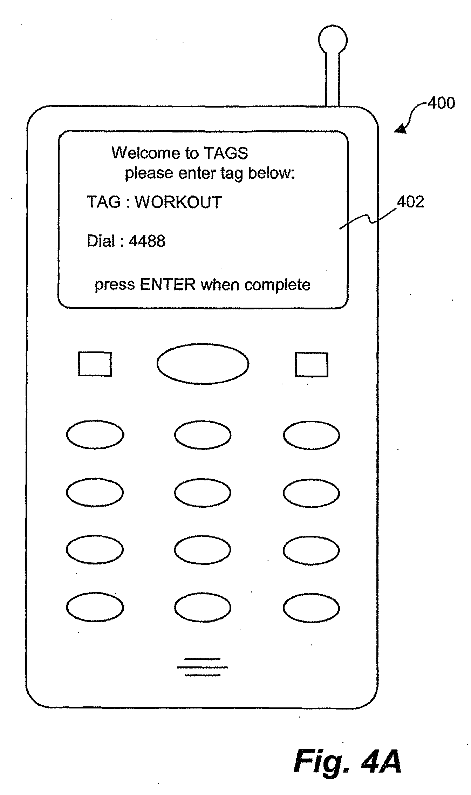

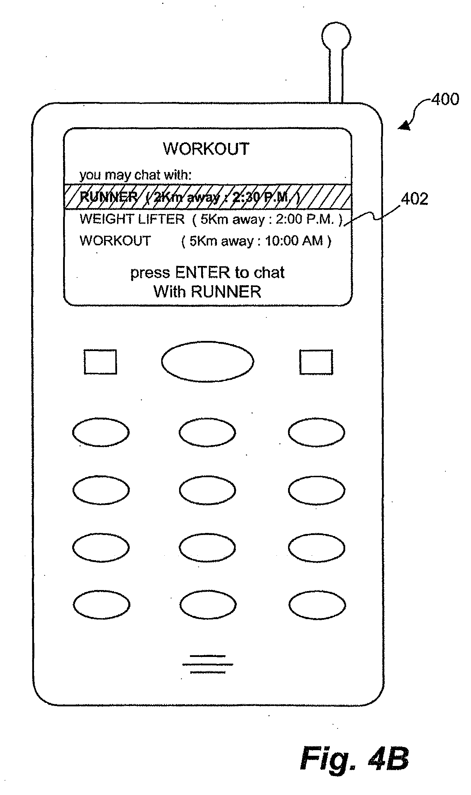

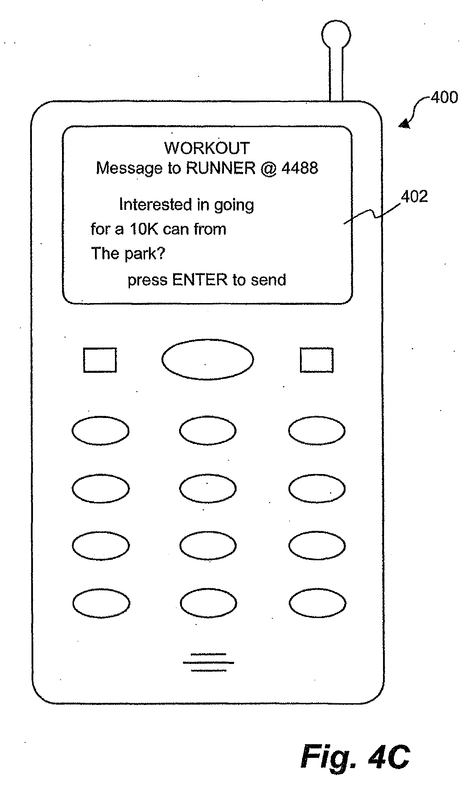

It will be appreciated that there may be circumstances where a user of the system would like to prohibit further contact with one or more other identified users. This may be accomplished by using a banned user relations database as generally illustrated in connection with Figs. 4A-4E. Thus, Fig. 4A illustrates an example where the user of mobile unit 400 enters the tag WORKOUT using the welcome page interface as shown in the illustrated display 402. In response, the first user receives a list of potential contacts as shown in Fig. 4B and establishes contact with a user identified by the tag RUNNER. In particular, the first user may enter a message for transmission to RUNNER as indicated in Fig. 4C. In the illustrated example, the first user is interested in finding a partner for a run.

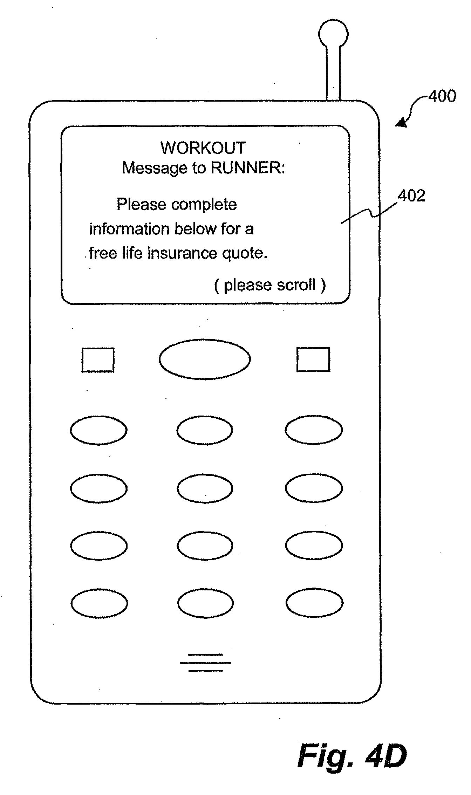

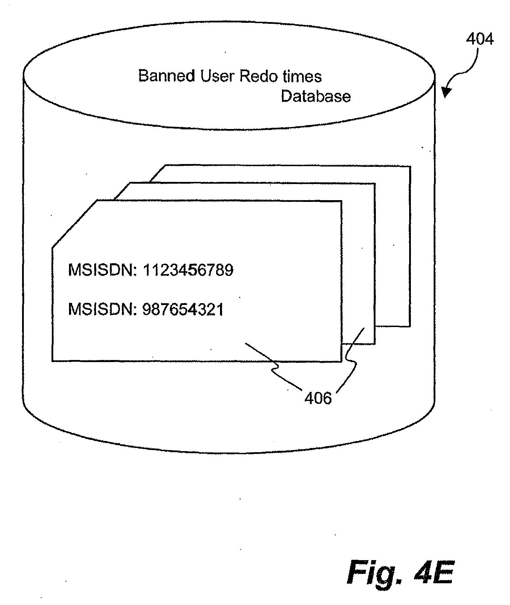

There are a variety of reasons why a contact established using the system may be less than ideal from the perspective of at least one of the users, and most of these reasons are innocuous. However, there may be instances where at least one of the users wishes to prohibit any future contact. Such is the case in the illustrated example, where the first user, who is looking for a running partner, instead receives a life insurance solicitation as shown in Fig. 4D. In response, the first user may enter a predefined command to establish a record 406 in a banned user relations database 404 as shown in Fig. 4E. For example, the user may enter a predefined key or key sequence for adding the current contact to the banned user relations database or may scroll to an appropriate command of a graphical user interface. In any case, a record 406 may thereby be established in the database 404 identifying the user pair or other user set that will be prohibited from further contacts within the system. As shown, the banned user relations database preferably defines such banned relations by reference to network identifiers of the associated users or other substantially permanent identifiers as opposed to, for example, a temporary identifier such as a tag. In this manner, users of the system are protected not only by the anonymity of the tag function but also by the ability to selectively disable contacts from undesired persons.

While various embodiments of the present invention have been described in detail, it is apparent that further modifications and adaptations of the invention will occur to those skilled in the art. However, it is to be expressly understood that such modifications and adaptations are within the spirit and scope of the present invention.

Insofar as embodiments of the invention described above are implementable, at least in part, using a computer system, it will be appreciated that a computer program for implementing at least part of the method and techniques is envisaged as an aspect of the present invention. The computer system may be any suitable apparatus, system or device for providing a computing platform. For example, the computer system may be a programmable data processing apparatus, a general purpose computer, a Digital Signal Processor or a microprocessor. The computer program may be embodied as source code and undergo compilation for implementation on a computer, or may be embodied as object code, for example.

Suitably, the computer program can be stored on a carrier medium in computer usable form, which is also envisaged as an aspect of the present invention. For example, the carrier medium may be solid-state memory, optical or magneto-optical memory such as a readable and/or writable disk for example a compact disk and a digital versatile disk, or magnetic memory such as disc or tape, and the computer system can utilise the program to configure it for operation. The computer program may be supplied from a remote source embodied in a carrier medium such as an electronic signal, including radio frequency carrier wave or optical carrier wave.

In view of the foregoing description of particular embodiments of the invention it will be appreciated by a person skilled in the art that various additions, modifications and alternatives thereto may be envisaged.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for use in providing location-based services in a wireless network, comprising the steps of:
establishing a location-based service system for providing location-based services in a wireless network;
receiving, in said system, a first user defined service request having a first content established by a first user independent of said services application, wherein said first user defined service request identifies a characteristic of information desired by said first user;
obtaining first location information associated with said first user defined service request, wherein said first location information is obtained separate from said first user defined service request;
operating said system to identify information responsive to said first user defined service request using said location information and said first content; and
transmitting said identified information to said first user.

2. A method as set forth in Claim 1, wherein said step of receiving comprises receiving a term entered by said first user, where said term relates to a contact desired by said first user.

3. A method as set forth in Claim 1 or 2, wherein said step of receiving comprises receiving a term that identifies an interest of said first user for purposes of identifying a second system user so as to establish contact therebetween.

4. A method as set forth in Claim 1, 2 or 3 wherein said step of receiving comprises receiving a term that indicates an interest of said first user related to certain goods or services.

5. A method as set forth in any preceding claim, wherein said step of obtaining comprises receiving location information from a mobile unit of said first user separate from said service request.

6. A method as set forth in any preceding claim, wherein said step of obtaining comprises receiving said first location information from a network-based location source for providing location information for a mobile unit of said first user based, at least in part, on a location said mobile unit in relation to a stationary ground-based structure of said wireless network.

7. A method as set forth in any preceding claim, wherein said step of operating comprises applying a content-based rule for matching said first content to second content of a second service request entered by a second user.

8. A method as set forth in Claim 7, wherein said content-based rule is used to match contents that are different based on logical algorithms.

9. A method as set forth in any preceding claim, wherein said step of operating comprises matching said first user to a second user based on proximity.

10. A method as set forth in any preceding claim, wherein said step of operating comprises applying a time-based rule for matching said first user to a second user.

11. A method as set forth in any preceding claim, wherein said step of transmitting comprises providing contact information regarding one or more potential users of said network.

12. A method as set forth in Claim 11, wherein said contact information anonymously identifies a user based on an alias such that said first user does not receive any information useful for contacting said second user independent of said location-based service system.

13. A method as set forth in any preceding claim, further comprising the step of providing a function for preventing certain defined contacts between identified users of said network.

14. A method for use in providing location-based services in a wireless network comprising the steps of:
establishing a location-based service system for providing location-based services in a wireless network, wherein said location-based services involve providing user information regarding a first network user to at least one other network user;
establishing a first location-based services contact set utilizing first user information regarding said first user;
first associating a first contact set specific identifier with said first user, wherein said first identifier identifies said first user to a second network user in connection with said first contact set;
establishing a second location-based services contact set utilizing second user information regarding said first user; and
second associating a second contact set specific identifier, different than said first contact set specific identifier with said first user, wherein said second identifier identifies said first user to a third network user in connection with said second contact set.

15. A method as set forth in Claim 14, wherein each of the first and second identifiers comprises an alias for identifying said first user within said service system free from providing information useful for contacting said first user independent of said service system.

16. A method as set forth in Claim 14 or 15, wherein said second network user is different than said third network user.

17. A method for use in providing location-based services in a wireless network, comprising the steps of:
receiving tag information from a number of wireless network users, where each tag relates to an interest of an associated user;
obtaining location information regarding the locations of said number of wireless network users;
matching a first user and a second user based on said user defined tags and said location information; and
providing information to at least one of the first and second users regarding the other of the first and second users.

18. A method as set forth in Claim 17, wherein said step of matching comprises applying content-based rules using said tags and proximity-based rules using said location information

19. A method as set forth in Claim 17 or 18, further comprising:
matching said first user and a third user based on said user defined tags and said location information; and
said step of providing information comprises providing a presentation of identification information regarding each of said second and third users to said first user, wherein said presentation is prioritized based on at least one of content matching rules regarding said tags and proximity-based rules regarding said location information.

20. An apparatus for use in providing location-based services in a wireless network, comprising:
an input port system for receiving input tags from wireless network users, wherein each tag includes content for identifying an associated network user, said input port system further being operative for receiving location information regarding said wireless network users;
logic for identifying a match between at least a first of said wireless network users and a second of said wireless network users based on respective first and second tags of said users and a proximity of said first and second wireless network users; and
an output port for providing an output to at least one of said first wireless network user and said second wireless network user in response to said identified match.

21. An apparatus as set forth in Claim 20, wherein said logic is operative for executing content-based rules in relation to said input tags and proximity-based rules in relation to said location information.

22. An apparatus as set forth in Claim 20 or 21, wherein said logic is operative for executing time-based rules in relation to times associated with said input tags.

23. A method for use in establishing a virtual marketplace for marketable subject matter, comprising the steps of:
establishing a system for receiving inputs from offerors and potential customers with respect to said marketable subject matter and for matching a particular offeror to a particular potential customer based or associated inputs;
receiving, in said system, a first offeror input defining offered subject matter;
obtaining, in said system, marketplace location information defining a marketplace location for said offered subject matter;
receiving, in said system, a customer request from a first potential customer, associated with a first wireless device defining requested subject matter where at least one of said offered subject matter and said requested subject matter is defined independent of any pre-existing definition of said system;
obtaining, in said system, customer location information associated with a customer location of said first wireless device; and
operating said system to selectively match said first offeror and said first potential customer based on a first comparison of said offered subject matter and said requested subject matter and a second comparison of said marketplace location and said customer location.

24. A computer program comprising processor implementable instructions for causing a programmable processing apparatus to become configured to implement at least part of the method of any of claims 1 to 19 or 23 and/or to become configured as an apparatus of any of claims 20 to 22.

25. A computer readable medium carrying the computer program of claim 24.
